# EUROPEAN PATENT APPLICATION

(11) **EP 1 424 192 A1**
(43) Date of publication of application: **02.06.2004**
(21) Application number: 03026423.8
(22) Date of filing: 19.11.2003
(51) Int. Cl.: B32B 7/04, E01C 13/08

(54) **Composite panel for covering the ground, floors and walls of buildings**

(30) Priority: 28.11.2002 IT mi20022528
(71) Applicant: Preformati B.M.C. S.R.L., 24040 Filago(Bergamo) (IT)
(72) Inventor: Locatelli, Luciano, 24040 Filago(Bergamo) (IT)
(74) Representative: Frignoli, Luigi

(57) **Abstract**

A composite panel usable for covering the ground, floors and walls of buildings and the like, comprising a base slab formed of rubber or of hot-agglomerated chips of thermoplastic material, an intermediate polyethylene sheet and an enhancing panel, the base slab and the enhancing panel being fixed under hot conditions onto the two opposing surfaces of the intermediate sheet.

## Description

The invention relates to a composite panel applicable to the ground, to the floor or to the walls of buildings and the like, and having good mechanical strength, good resistance to bad weather and to temperature changes, superior thermal and acoustic characteristics, with an enhancing panel which enables it to be used, and suggests its use, for the most disparate purposes.

European patent application EP-A-1247632 in the name of the present applicants describes a method by which compact slabs can be obtained formed from chips of thermoplastic material (in particular closed or open-cell expanded polyethylene, or expanded polyurethane, rubber or the like) agglomerated under hot conditions: these slabs have superior characteristics of lightness, mechanical strength, thermal and acoustic insulation, softness and elastic deformability, suggesting their widespread use in the most disparate fields. Their use is however limited by the fact that the outer appearance of these slabs is not particularly attractive from the aesthetic viewpoint, whereas for some specific uses that surface which remains facing the user when the slabs have been mounted in the place in which they are used is insufficiently soft or strong, so much so that the slabs, when installed, are often covered and protected by a layer of material of a different type, for example by a fabric.

It has been attempted to fix, onto that surface of each base slab which is to face the user, enhancing panels consisting of simple or rubberized fabrics, linoleum, carpet, cork or wood: all commercially available glues have been used for this purpose, however the results have been decidedly negative, either because the glues harden the slab surface on which they are applied or because their stable adhesive function ceases or is completely nullified with increase (for example beyond +30°C) or decrease (for example to -20°C) in the temperature to which the slabs are exposed, so making their use impossible if the slabs enhanced in this manner are subjected to surface mechanical stresses.

Fabrics are also known having the appearance of lawns with synthetic grass; such fabrics are used for paving playgrounds, football fields, mini-football fields, tennis courts or the like; their drawback consists of the fact that the said fabrics are very thin and flexible, such that it becomes practically impossible to use them as such for the aforesaid uses. Moreover (as already stated for other enhancing panels) attempts to fix the fabrics onto the base stabs by glue have given negative results, this being easily understandable considering that for the stated uses, the mechanical stresses, for example transmitted by the shoes of players running or braking violently on them, are very strong and violent.

To further clarify this matter, those panels having the outer appearance of a lawn or synthetic grass are formed for example from a tufted fabric formed from polypropylene threads (or the like) having a thickness of about 41 microns, from a surface of which tufts of polypropylene thread or thin ribbon (preferably green in colour) project (for a height from 6 to 8 mm) with about 63,000 points per m². On the other surface of this fabric there is applied a layer or backing of rubber which binds the threads together and ensures stability of the fabric.

The main object of the present invention is to provide a soft composite panel which is resistant to temperature and to use, is a good thermal and acoustic insulant, and has a surface on which an enhancing panel such as the aforestated or the like is fixed.

Another object is to enable the aforesaid composite panel to be easily and economically produced by machines and equipment commonly used in those firms which produce materials of this type.

The invention hence comprises a composite panel comprising a base slab formed of rubber or of hot-agglomerated chips of thermoplastic material and of which on one surface an enhancing panel is fixed, characterised in that between said base slab and the enhancing panel there is interposed an intermediate polyethylene sheet which is fixed under hot conditions both onto the base slab and onto the enhancing panel.

Preferably, the intermediate sheet consists either of a thin film or flexible sheet of -polyethylene or a layer or panel of closed or open-cell expanded polyethylene having a thickness between 1 mm and 4 cm, preferably 5 mm. The invention also-relates to the method for obtaining the aforesaid composite panel.

The structure and characteristics of the composite panel according to the present invention will be more apparent from the ensuing description of one embodiment thereof given by way of non-limiting example with reference to the accompanying drawing, in which:

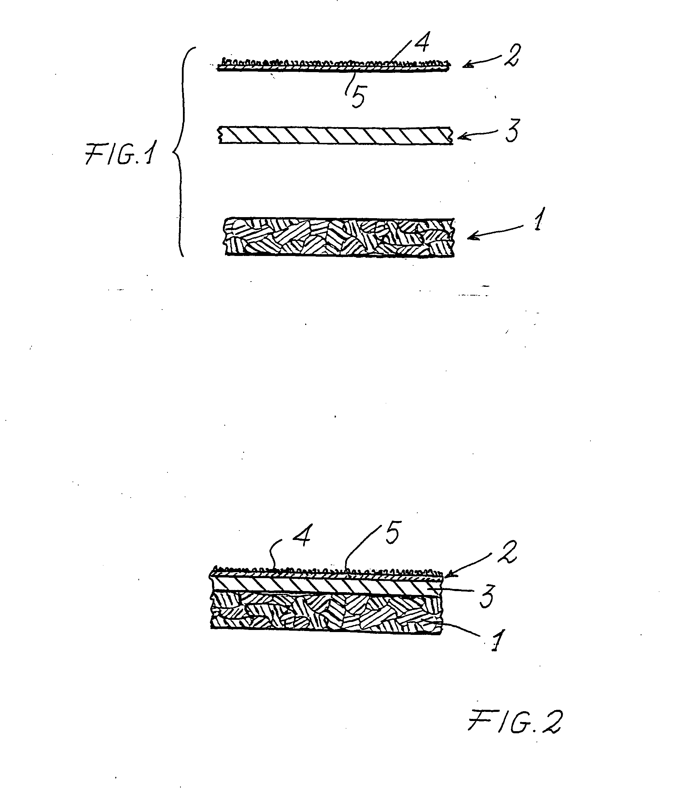

Figure 1 is a section through the various components of a panel, which are shown spaced apart, and
Figure 2 is a section through a finished composite panel.

The figures show a base slab 1, an enhancing panel 2 and an intermediate sheet 3.

The slab 1 (of the desired thickness, according to the use for which it is intended) is formed from a compact mass of rubber or of chips of thermoplastic material (in particular closed or open-cell expanded polyethylene, or expanded polyurethane, or similar thermoplastic materials) agglomerated under hot conditions under pressure, in accordance with the teachings of EP-A-1247632.

The slab 1 is light, strong, soft and possesses superior thermal and acoustic insulation characteristics.

The enhancing panel 2 represented in the drawing is formed from a tufted fabric (i.e. having tufts or the like projecting from one of its surfaces) formed from polypropylene threads of 41 micron thickness, from whose upper surface tufts 4 of polypropylene thread or thin ribbon green in colour project for a height of 7 mm, with about 63,000 points per m².

The other surface of the fabric is covered with a layer or backing of rubber 5 which binds the threads together and ensures stability of the fabric, which is well known and commercially available, its tufts 4 giving it the appearance of a lawn with threads of synthetic grass.

The intermediate sheet 3 is formed from a layer or panel of closed or open-cell expanded polythene preferably of about 5 mm thickness, but this thickness could be between 1 mm and 4 cm; however instead of being formed from a panel of expanded polyethylene, the sheet 3 can consist of a thin flexible polyethylene film (of about 1 mm thickness).

Finally, all the individual components for forming the composite panel of the invention are per se known.

The composite panel can be formed intermittently using presses to produce small-dimension composite panels, or continuously using the components in the form of continuous webs which are pressed between the pressing rollers of a calender.

In a first step of the process, the intermediate sheet 3 is laid against the rubberized surface of the enhancing panel 2 and the two opposing surfaces are heated by fan-blown hot air, or by infrared rays or burners: the temperature which has to be attained is the softening point of the rubber (at least 30°C) or of the expanded polyethylene surface (between about 100°C and 150°C, preferably just above 100°C), the two opposing surfaces then being pressed together (at a pressure from 3 to 15 bar, preferably to about 6÷9 bar) with a press. After cooling, the panel 2 and the sheet 3 remain securely hot-joined together (i.e. their opposing surfaces have been fused together), while preserving the original flexibility and softness of its original components. If the panel 2 and the sheet 3 were to consist of continuous webs (instead of small-dimension sheets), these webs would be continuously coupled together between the opposing rollers of a calender, with the opposing surfaces of said webs being heated continuously to the said softening temperature immediately upstream of the calender.

At this point the free surface (the lower surface in the drawings) of the sheet 3 (on which the enhancing panel 2 has already been applied) is put close to (and then rested) against the upper surface of the base slab 1, the material forming the sheet 3 or the material forming the slab 1 is then heated (in the aforesaid manner) to its softening point, after which compression is applied at about 8÷9 bar followed by cooling, exactly in the aforedescribed manner: this temperature can even reach 200°C (its average is about 120°C) or can also be only 30°C if the slab 1 is a rubber slab.

When all the components have been hot-coupled together under pressure in the described manner, a composite panel is obtained presenting considerable lightness, softness, resistance to temperature change and resistance to mechanical stresses, its outer appearance being that of a lawn with synthetic blades of grass.

The free edges of the composite panels obtained in this manner can be smooth or respectively present profiled undercuts and projections to enable one composite panel to be insertion-fitted to another.

Instead of consisting of a fabric with tufts of threads having the appearance of a lawn, the enhancing panel 2 can consist of panels or plates of linoleum, cork, wood, carpet, or fabrics of any type and nature, possibly rubberized.

The composite panels of the invention have proved to be usable with considerable effectiveness and with exceptional results for covering the ground or the floor or walls of buildings to form football fields (either regular or for children, either removable or fixed), tennis courts, flooring for gymnasiums, for swimming pools, for playgrounds, gardens, nursery schools and normal schools (both internal and external to the buildings), golf courses, fiooring for public premises, or for embellishing and simultaneously heat and sound insulating floors and walls of rooms or the like.

## Claims

1. A composite panel comprising a base slab (1) formed of rubber or of hot-agglomerated chips of thermoplastic material and of which on one surface an enhancing panel (2) is fixed, **characterised in that** between said base slab (1) and the enhancing panel (2) there is interposed an intermediate polyethylene sheet (3) which is fixed under hot conditions both onto the base slab (1) and onto the enhancing panel (2).

2. A composite panel as claimed in claim 1, **characterised in that** the intermediate sheet (3) consists either of a thin film or flexible sheet of polyethylene or a layer or panel of closed or open-cell expanded polyethylene having a thickness between 1 mm and 4 cm.

3. A composite panel according to claims 1 and 2, **characterized in that** the enhancing panel (2) is formed from a tufted fabric with a free surface from which tufts (4) of polypropylene thread or thin ribbon project.

4. A composite panel according to claims 1-3, **characterized in that** at its free edges the panel (1-3) exhibits profiled untercuts acid projections to enable one composite panel to b insertion-fitted to another.

5. A method for obtaining a composite panel claimed in claims 1-4, **characterised by** bringing the two opposing surfaces of the enhancing panel (2) and of the intermediate sheet (3) close to each other and heating them to the softening point of polyethylene or of a rubber layer applied to the surface of the enhancing panel (2), they then being pressed against each other and then cooled, after which a surface of the base slab (1) is brought close to the free surface of the intermediate sheet (3) obtained in the aforesaid manner, and heated to the softening point of the intermediate sheet (3) or of the constituent material of the base slab (1), the two surfaces are pressed one on the other, and finally cooled to ambient temperature.
